**Europäisches Patentamt**

**European Patent Office**

**Office européen des brevets**

(19)

(11) Numéro de publication: **0 224 290**
**B1**

---

## FASCICULE DE BREVET EUROPEEN

(12)

(45) Date de publication du fascicule du brevet:
**08.02.89**

(21) Numéro de dépôt: **86201919.7**

(22) Date de dépôt: **03.11.86**

(51) Int. Cl.⁴: **E04B 1/343,** E04H 3/16,
A01G 9/16, A01G 9/14,
E04B 7/16

(54) **Structure de couverture découvrable.**

(30) Priorité: **06.11.85 FR 8516464**

(43) Date de publication de la demande:
**03.06.87 Bulletin 87/23**

(45) Mention de la délivrance du brevet:
**08.02.89 Bulletin 89/6**

(84) Etats contractants désignés:
**AT BE CH DE ES FR GB GR IT LI LU NL SE**

(56) Documents cités:
**EP-A- 0 001 948
CH-A- 613 249
FR-A- 2 555 219
GB-A- 1 551 771
US-A- 2 323 106**

**SCHWIMMBAD & SAUNA,
vol. 15, no. 8/9, août-septembre 1983, Stuttgart, DE;
"Auch bei Regen im Trockenen schwimmen"**

(73) Titulaire: **BRELAN S.A., 15, avenue Emile Reuter,
L-2420 Luxembourg(LU)**

(72) L'inventeur a renoncé à sa désignation

(74) Mandataire: **Meyers, Ernest et al, Office de Brevets
Freylinger & Associés 46 rue du Cimetière B.P. 1153,
L-1011 Luxembourg(LU)**

**Description**

La présente invention concerne une structure de couverture découvrable d'un endroit quelconque, notamment d'une piscine.

On connaît déjà des structures de couvertures qui comprennent généralement plusieus éléments fixes ou mobiles téléscopiquement le long de la zone à couvrir, chaque élément, mobile ou non, comprenant une paire d'arceaux parallèles entre lesquels s'étendent des plaques de couverture transparentes ou translucides. Les profils formant arceaux sont faits en une pièce ou un profil avec de chaque côté deux rainures seulement, permettant aux plaques de couverture qui sont également en deux morceaux seulement, sensiblement de même longueur et d'une certaine souplesse et qui sont engagées dans chaque élément, de coulisser transversalement et de se superposer l'une l'autre à un endroit quelconque du développé de l'arceau, mais en ne découvrant seulement qu'à peine 50% de la longueur de celui-ci. Une structure de ce genre est connue du document Schwimmbad & Sauna, vol 15, No 8/9, août-septembre 1983, Stuttgart, pages 54–61.

La présente invention concerne des perfectionnements apportés à ce type de structure de couverture dans le but d'en augmenter les conditions d'emploi et ce, grâce à une combinaison de moyens très simples.

A cet effet, cette structure découvrable de couverture d'un endroit quelconque, notamment d'une piscine, comprenant plusieurs éléments de couverture s'étendant au-dessus de la zone à couvrir, chaque élément de couverture comprenant une paire d'arceaux transversaux entre lesquels s'étendent des plaques de couverture transparentes ou translucides dont les extrémités longitudinales sont engagées respectivement dans des rainures des deux arceaux d'une même paire de manière à pouvoir coulisser transversalement, est caractérisée en ce que chaque arceau d'un élément de la couverture présente, dans l'une au moins de ses faces frontales et verticales, au moins trois rainures parallèles et superposées, s'étendant sur toute la longueur de l'arceau, et dans lesquelles sont respectivement logées les plaques de couverture en au moins trois morceaux sensiblement de même longueur et en ce que chaque arceau d'un élément de la couverture est constitué par la superposition d'un arceau élémentaire inférieur, formant support, et d'au moins trois arceaux élémentaires plans, pourvus de nervures longitudinales formant entretoises, empilés les uns sur les autres au-dessus de l'arceau support inférieur et délimitant entre eux les rainures de guidage des plaques de couverture.

Suivant l'invention, chaque arceau a au minimum trois voire quatre rainures, ceci permet d'avoir les plaques de couverture en trois morceaux sensiblement de même longueur, voire quatre morceaux sensiblement de même longueur, ce qui donne la possibilité de découvrir une surface beaucoup plus importante du développé de l'arceau et en particulier de grouper et de superposer les plaques de couverture qui sont en trois ou quatre morceaux au faitage de l'arceau, en dégageant complètement les parties latérales de l'ouvrage, ce qui n'oblige pas les utilisateurs à se baisser pour accéder à l'intérieur de la structure.

L'arceau élémentaire inférieur formant support et les arceaux élémentaires plans sont avantageusement réalisés en acier ou en alliage léger, par extrusion, les arceaux élémentaires plans étant identiques les uns aux autres.

Une telle disposition est avantageusement choisie pour des problèmes de facilité de cintrage et de facilité de pose. En effet, si le profil est fait en une pièce ou un profil avec deux rainures de chaque côté, il y a de grandes difficultés au cintrage, car, les rainures étant perpendiculaires au sens du cintrage, il faut des outillages compliqués et coûteux (dus au fait que la dureté du profil, dans le cas d'alliage léger, n'est jamais constante sur toute sa longueur), pour essayer d'obtenir des cotes justes et constantes entre les rainures sur tout le développé de l'arceau, cotes justes qui conditionnent un coulissement transversal possible, voire aisé, des plaques de couverture faites en deux morceaux sensiblement de même longueur.

Au contraire, suivant l'invention, le profil de base, dans le cas où il est fait par extrusion en alliage léger, se cintre aisément et sans malformation du fait de sa conception avec une gorge en U dans sa partie médiane, qui permet à l'outillage à galet de cintrage de venir appuyer facilement au fond de la gorge en U ainsi que sur l'autre face. Le profil de base peut aussi être réalisé, pour des raisons d'économie, en tube d'acier carré ou rectangulaire, ou en acier en forme de U ou de T.

Les rainures, quant à elles, sont délimitées à partir d'un seul et même profil qui s'empile sur lui-même pour former le nombre de rainures souhaitées. Ce profil, par sa forme, se cintre évidemment sans aucune difficulté ni malformation possible. De ce fait, la cote intérieure des rainures est égale à coup sûr, à la dimension souhaitée et le coulissement des plaques est garanti d'une façon aisée.

Suivant l'invention, on peut réaliser facilement une forme de voûte à plusieurs rayons de courbure qui permet d'obtenir une forme ovoïde qui donne déjà 1,80 m de hauteur de chaque côté à 1 m du bord de la piscine, si la couverture est destinée à cette utilisation, ce qui donne une trés bonne habitabilité aux plaques latérales tout en n'ayant que 3 m environ de hauteur dans la partie centrale pour une largeur totale par exemple de 12 m à la base de la voûte.

Par ailleurs, dans le cas où il y a des éléments coulissants, les chemins de roulement, s'ils sont encastrés, sont des nids à poussière, gravier, feuilles mortes, etc... et s'ils sont mis sur la dalle, présentent des dangers pour les pieds souvent nus des utilisateurs. Suivant l'invention le chemin de roulement des arceaux, dans le cas d'une structure téléscopique, est réalisé en profil d'aluminium extrudé traité par oxydation anodique ou autre traitement. Sa forme spéciale ne présente aucune arête vive ou partie qui risque de blesser les pieds, généralement nus, des utilisateurs. De plus la hauteur de ce profil de roulement est acceptable car basse et il présente une gorge sans arête vive qui permet au moyen d'un autre profil ou tôle pliée en forme de crochet, d'assurer l'antidégondage par grand vent des arceaux formant la structure.

On décrira ci-après, à titre d'exemple non limitatif une forme d'exécution de la présente invention, en référence aux dessins annexés sur lesquels:

La figure 1 est une vue en coupe verticale schématique d'un arceau d'une structure découvrable de couverture dans le cas présent d'une piscine suivant l'invention, cette structure étant représentée totalement fermée.

La figure 2 est une vue en coupe semblable à celle de la figure 1, les trois plaques de couverture étant regroupées et superposées les unes sur les autres au sommet de la structure.

La figure 3 est une vue en coupe semblable à celle de la figure 1, les trois plaques de couverture étant regroupées et superposées les unes sur les autres d'un côté de la structure.

La figure 4 est une vue en coupe transversale, à plus grande échelle, des profils constituant chaque arceau de la structure.

La figure 5 est une vue en coupe verticale et longitudinale d'un exemple possible de structure de couverture téléscopique.

La figure 6 est une vue en coupe verticale et transversale, à plus grande échelle, de la partie inférieure des arceaux fixes et mobiles, en position découverte, de la structure téléscopique représentée sur la figure 5.

La figure 7 est une vue en coupe transversale, à échelle 1, du profil constituant le chemin de roulement d'un arceau mobile de la structure de couverture téléscopique représentée sur les figures 5 et 6.

La figure 8 est une vue en coupe transversale de deux arceaux superposés faisant partie respectivement des éléments fixe et mobile de la structure.

La figure 9 est une vue en coupe faite suivant la ligne IX-IX de la figure 8.

La figure 10 est une vue de face de l'anneau du dispositif de sécurité.

La figure 11 est une vue en coupe transversale des arceaux extrêmes voisins des deux éléments mobiles se trouvant respectivement de part et d'autre du plan transversal médian de la piscine.

La figure 12 est une vue en élévation d'un dispositif de jonction de deux tronçons d'arceau élémentaire formant support.

La figure 13 est une vue en coupe faite suivant la ligne XIII-XIII de la figure 12.

La structure découvrable de couverture suivant l'invention qui est représentée sur le dessin, dans le cas non limitatif d'une application à une piscine 1, comprend des arceaux 2 s'étendant dans des plans transversaux en étant alignés dans le sens longitudinal et délimités, à leurs extrémités inférieures, par une corde de plus grande longueur que la largeur du bassin 1. Chacun des arceaux 2 repose ainsi, sur le bord de la piscine, à une distance suffisante du bord du bassin 1 pour permettre la circulation des baigneurs dans l'espace compris entre le bord du bassin 1 et le pied de chaque arceau 2. Par ailleurs, la structure comprend au moins trois plaques de couverture transparentes 3 s'étendant longitudinalement, en étant incurvées avec la même courbure que celle des arceaux, entre deux arceaux successifs. Dans l'exemple non limitatif représenté sur le dessin, la structure de couverture comprend, entre deux arceaux 2 successifs, trois plaques transparentes 3 mais il va de soi que l'on pourrait avoir un nombre de plaques supérieur à trois entre chaque paire d'arceaux. Chacune de ces plaques 3 est montée à coulissement dans le sens transversal, à ses deux extrémités longitudinales, dans les deux arceaux opposés 2, dans des rainures correspondantes prévues, comme il sera décrit en détail plus loin.

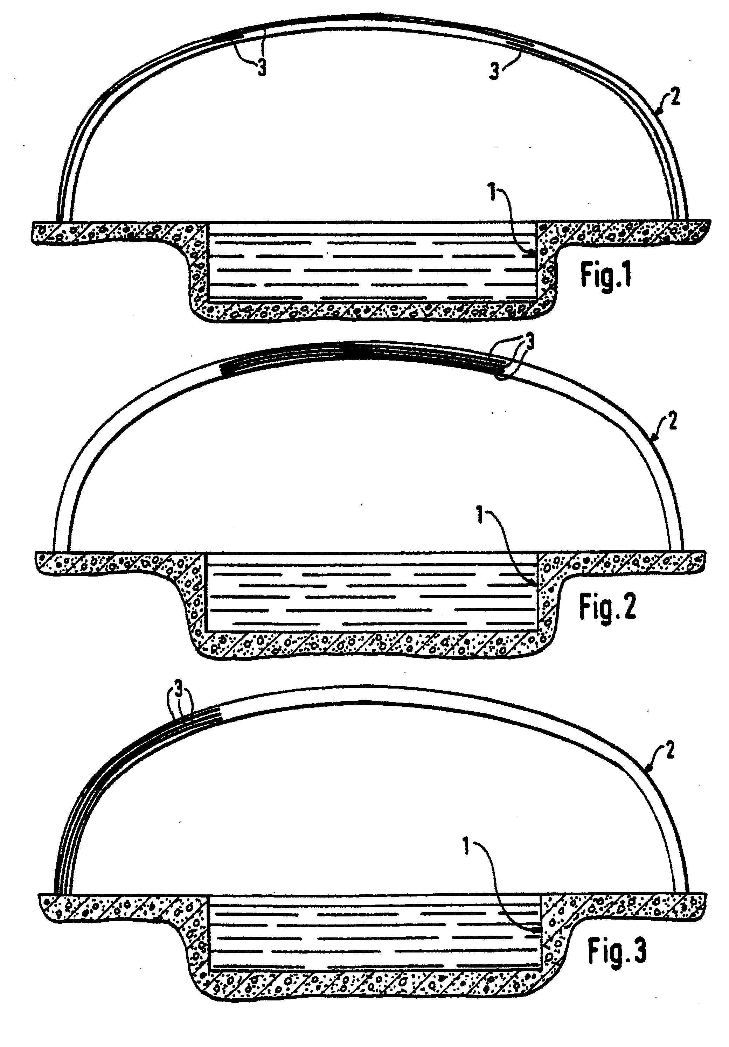

Les figures 1 à 3 illustrent la façon dont la structure de couverture suivant l'invention peut assurer une couverture totale ou partielle de la zone se trouvant sous elle. Sur la figure 1, les trois plaques de couverture 3 sont réparties à raison d'une plaque centrale en partie supérieure et deux plaques sur les deux côtés de la structure, si bien que la zone se trouvant sous la structure est totalement couverte.

Dans le cas de la figure 2, les trois plaques 3 sont regroupées au sommet de la structure, en étant superposées les unes aux autres, si bien que les deux côtés de la structure sont découverts.

Dans le cas illustré sur la figure 3, les trois plaques de couverture 3 sont regroupées du côté gauche de la structure, ce qui laisse ainsi découvertes la partie centrale et la partie droite de la structure.

On voit également sur les figures 1 à 3, la forme particulière des arceaux 2 constituant une voûte à plusieurs rayons de courbure permettant d'obtenir une forme ovoïde assurant une grande hauteur de passage de chaque côté du bassin de la piscine.

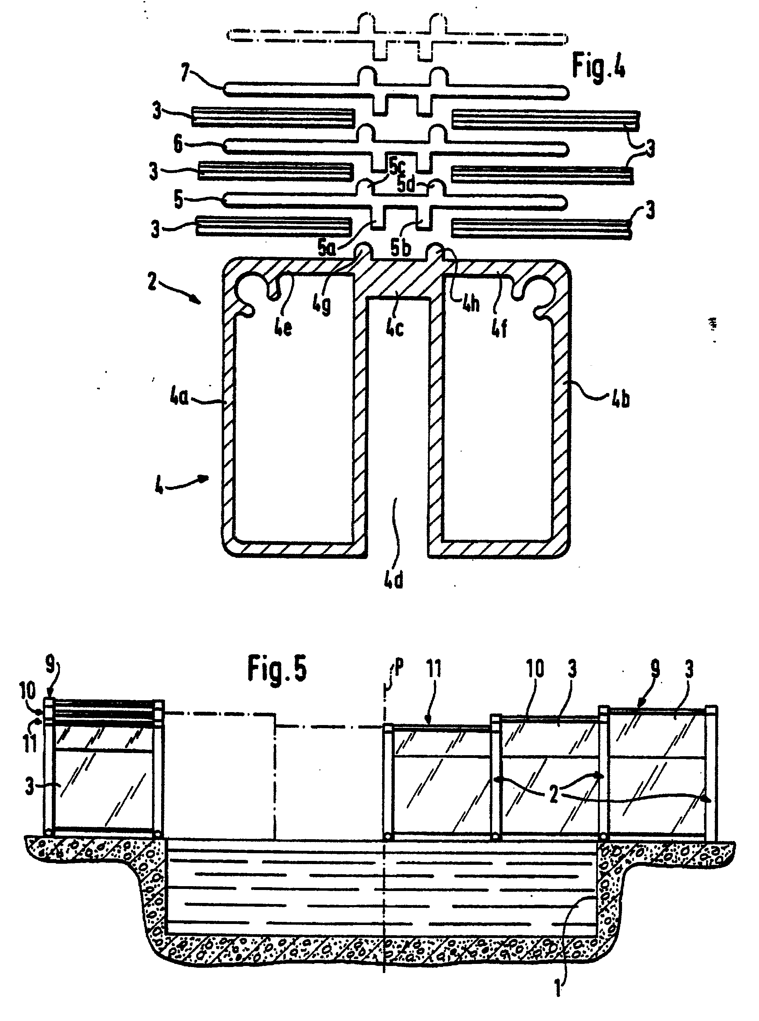

Chaque arceau 2 est constitué de plusieurs arceaux élémentaires, comme on peut mieux le voir sur la figure 4. Il comprend tout d'abord un arceau élémentaire inférieur 4, formant un support inférieur pour l'ensemble de l'arceau. Cet arceau élémentaire inférieur 4, réalisé en alliage léger extrudé, a une section droite sensiblement rectangulaire ou carrée. Cet arceau élémentaire inférieur 4 est en fait constitué de deux caissons parallèles 4a, 4b de section droite rectangulaire distants l'un de l'autre, dont les grands côtés verticaux sont parallèles et qui sont reliés entre eux, du côté supérieur, par une âme de liaison 4c. Cette structure définit ainsi une rainure 4d, s'ouvrant vers le bas et s'étendant sur toute la longueur de l'arceau élémentaire 4. L'âme supérieure 4c qui assure la liaison entre les petits côtés supérieurs 4e, 4f des deux caissons 4a, 4b et qui est dans le même plan que ceux-ci, présente, sur sa face supérieure, deux nervures longitudinales 4g, 4h s'étendant tout le long de l'arceau élémentaire formant support 4.

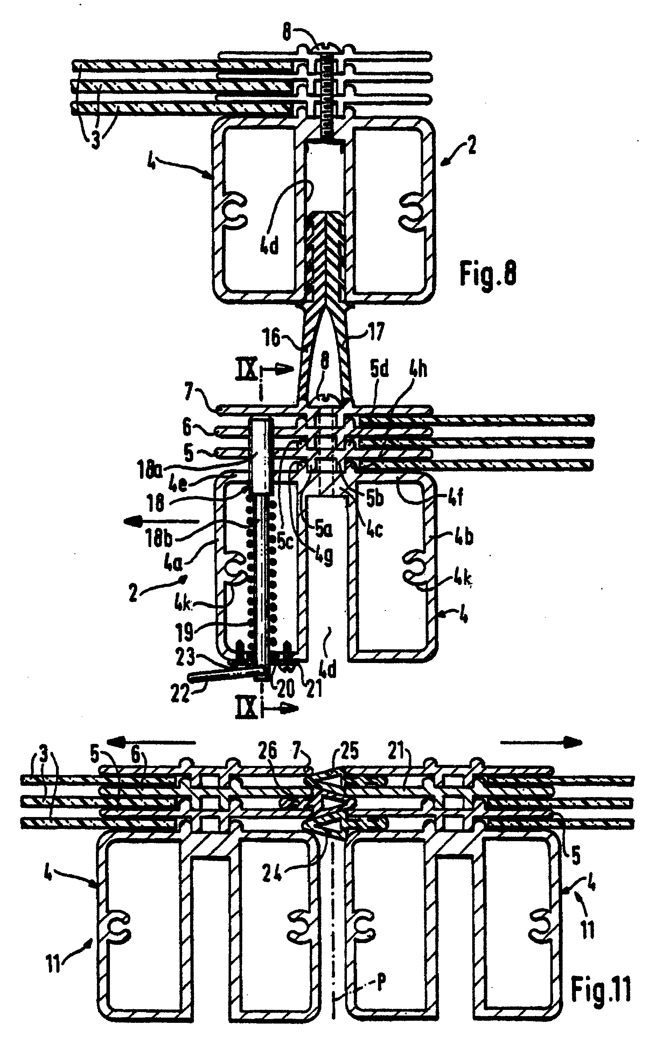

L'arceau 2 comporte par ailleurs au moins trois arceaux élémentaires plans superposés, identiques les uns aux autres, également réalisés en alliage léger extrudé. Comme les trois arceaux élémentaires plans 5, 6, 7, sont identiques, on ne décrira en détail que l'un d'entre eux, à savoir l'arceau élémentaire plan 5 qui est le plus proche de l'arceau support inférieur 4. L'arceau élémentaire plan 5 comprend, sur la partie centrale de sa face inférieure, deux nervures longitudinales inférieures 5a, 5b formant entretroises et, dans la partie centrale de sa face supérieure, deux autres nervures longitudinales supérieures 5c, 5d qui font saillie vers le haut. La distance entre les faces internes des deux nervures supérieures 5c, 5d est choisie égale à la distance entre les faces externes des deux nervures inférieures 5a, 5b. Par conséquent, il est possible de superposer les arceaux élémentaires plans 5, 6, 7 comme il est représenté sur la figure 8 de manière que chaque paire de nervures inférieures 5a, 5b d'un arceau élémentaire plan viennent s'engager étroitement entre les nervures supérieures 5c, 5d de l'arceau élémentaire disposé juste en dessous. Cette disposition est également valable pour l'arceau élémentaire plan 5 qui est voisin de l'arceau élémentaire support 4, les deux nervures inférieures 5a, 5b de l'arceau élémentaire plan 5 s'engageant étroitement entre les deux nervures supérieures 4g, 4h de l'arceau élémentaire 4 formant support. L'ensemble des trois arceaux élémentaires plans 5, 6, 7 et de l'arceau élémentaire support inférieur 4 est rendu solidaire par tous moyens appropriés, de préférence au moyen de vis autotaraudeuses 8 qui traversent des trous percés dans les parties centrales des trois arceaux élémentaires plans 5, 6, 7 et l'âme de liaison 4c de l'arceau élémentaire support 4.

Sur la figure 5 est représentée une structure de couverture téléscopique recouvrant un bassin 1 d'une piscine. Cette structure comprend plusieurs éléments de couverture pouvant s'emboîter longitudinalement les uns dans les autres, chacun de ces éléments étant constitué par une paire d'arceaux 2 entre lesquels s'étendent au moins trois plaques de couverture 3. Ces éléments peuvent être, par exemple, au nombre de six, répartis symétriquement, en deux groupes de trois, de part et autre du plan transversal médian P du bassin de la piscine 1. On peut aussi faire par exemple des voûtes plus longues et avoir une voûte fixe à l'extérieur et d'un côté de la piscine et deux voûtes téléscopiques qui à elles deux font un peu plus que la longueur de la piscine.

Dans l'exemple représenté sur le dessin, la structure de couverture comprend donc, de chaque côté de la piscine, un élément extrême fixe 9, un élément intermédiaire mobile 10 et un élément extrême mobile 11. L'élément extrême fixe 9 peut être situé en totalité à l'extérieur du bassin de la piscine 1 tandis que les deux éléments mobiles 10 et 11 peuvent recouvrir, lorsqu'ils sont déployés totalement, comme il est représenté dans la partie droite de la figure 5, la moitié du bassin. L'élément mobile extrême 11 peut coulisser longitudinalement à l'intérieur de l'élément intermédiaire 10 et ce dernier peut coulisser à son tour longitudinalement à l'intérieur de l'élément fixe 9 comme il est représenté sur le dessin ou bien on peut aussi adopter une disposition inverse, c'est-à-dire que l'élément extrême mobile 11 pourrait coulisser à l'extérieur de l'élément mobile intermédiaire 10 lui-même monté à coulissement à l'extérieur de l'élément extrême fixe 9.

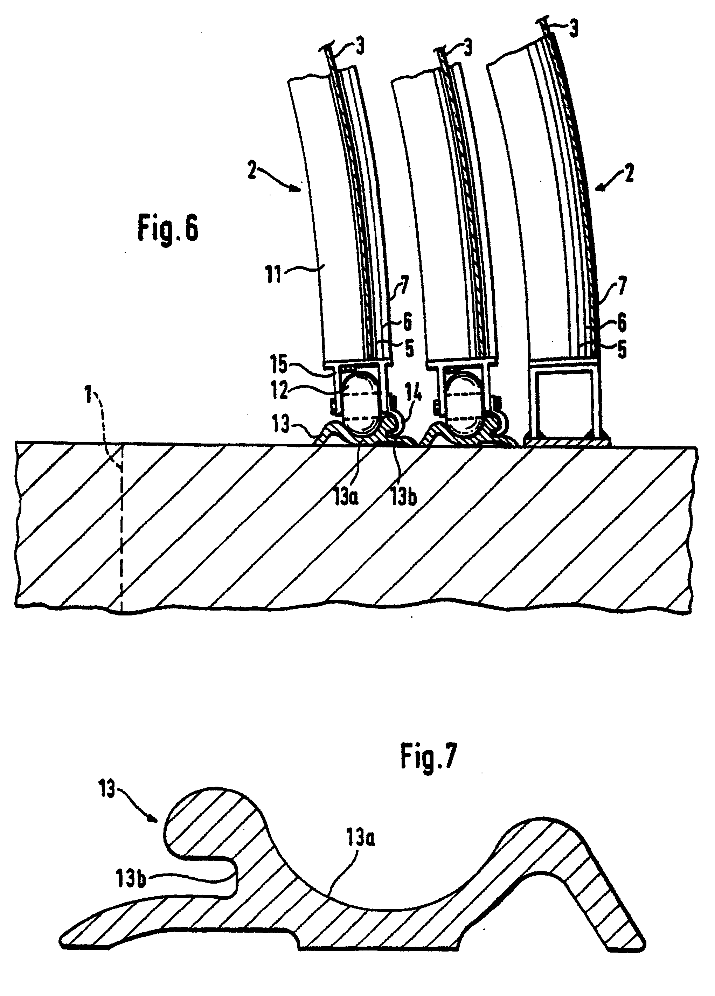

Pour permettre le coulissement longitudinal des deux éléments mobiles 10 et 11, les arceaux 2 de ceux-ci portent, à chacune de leurs extrémités inférieures, ainsi qu'il est représenté sur la figure 6, des galets 12 qui reposent sur un chemin de roulement longitudinal 13 fixé sur le bord supérieur de la piscine, à distance du bassin 1.

Le chemin de roulement 13 est de préférence constitué par un profil galbé ayant une section droite telle qu'illustrée sur la figure 7. Ce chemin de roulement 13 présente, dans sa surface supérieure, une gorge 13a à concavité tournée vers le haut et dans laquelle roule le galet 12. Par ailleurs il présente également, dans sa face externe, c'est-à-dire celle qui est opposée au bassin 1, une fente longitudinale et horizontale 13b dans laquelle est engagée l'extrémité inférieure d'un profilé ou d'une tôle pliée recourbée en forme de crochet 14 fixé à l'aile externe d'une chape 15 portant le galet 12. Ce crochet 14 qui est engagé dans la fente 13b, a pour rôle d'empêcher que les galets 12 ne sortent intempestivement de la gorge 13a, par exemple sous l'effet d'un choc ou de la poussée du vent. Sa forme et sa hauteur ont été étudiées afin de ne pas présenter d'arête vive pour ne pas blesser les pieds généralement nus des utilisateurs.

Pour assurer l'étanchéité entre les arceaux 2 venant se placer dans un même plan, lorsque la structure de couverture est déployée, il est prévu comme représenté sur la figure 8, des joints d'étanchéité à lèvres ou bavettes 16, 17 identiques mais symétriques par rapport à un plan, qui sont engagés dos à dos dans la rainure 4d de l'arceau élémentaire formant support 4 et qui s'étendent vers l'intérieur de la structure. Ces bavettes peuvent être facilement découpées au moyen d'un couteau afin d'épouser les inévitables différences d'espaces qui résultent des différences de cintrage de deux arceaux superposés. Les bavettes 16, 17 de l'arceau supérieur 2 sont ainsi coupées, comme on peut le voir sur la figure 8, de manière à venir frotter par leurs extrémités sur l'arceau élémentaire plan externe 7 de l'arceau mobile 2 situé à intérieur.

La structure de couverture suivant l'invention peut également comporter avantageusement, de chaque côté, un système simple de blocage de chacune des plaques de couverture 3 comprises entre une paire d'arceaux, ainsi qu'il est représenté sur les figures 8 à 10.

Ce système de blocage est destiné:

1) à verrouiller chaque plaque en position basse et d'empêcher de soulever celle-ci de l'extérieur;
2) à déclencher automatiquement, sans risque d'erreur possible, une sécurité qui empêche les plaques 3 relevées de chaque côté de redescendre d'elles-mêmes.

Le système de blocage comprend un axe 18 en acier inoxydable comportant deux sections de différents diamètres, à savoir une section 18a de grand diamètre et une tige 18b de plus petit diamètre, prolongeant la précédente hors du profilé vers l'intérieur de l'enceinte. Sur la tige 18b de petit diamètre est enfilé un ressort 19 en acier inoxydable, qui prend appui sur l'épaulement de l'axe 18 formé à la jonction entre les deux parties 18a et 18b. L'axe 18 est engagé transversalement à travers des trous en regard dont deux d'entre eux 20 et 20a sont percés à travers les parois opposées de l'arceau élémentaire formant support 4 et les autres trous sont percés dans les deux arceaux élémentaires plans 5, 6 qui lui sont immédiatement superposés, l'arceau élémentaire plan externe 7 n'étant pas percé. Après avoir engagé l'axe 18 avec son ressort 19 monté sur la tige de petit diamètre 18b à travers les trous percés dans les arceaux élémentaires, on obstrue le trou 20 de l'arceau formant support 4 qui est opposé aux rainures, par une plaquette 21 percée d'un petit diamètre de l'axe 18 et contre laquelle prend appui le ressort 19. La partie extrême de la tige 18b est percée d'un trou dans lequel on engage ensuite un anneau 22 permettant de manœuvrer le système de sécurité en tirant sur l'axe 18. Enfin on fixe la plaquette 21 sur l'arceau formant support 4, au moyen de vis 23, ce qui permet d'obstruer le trou 20 et de centrer l'axe 18.

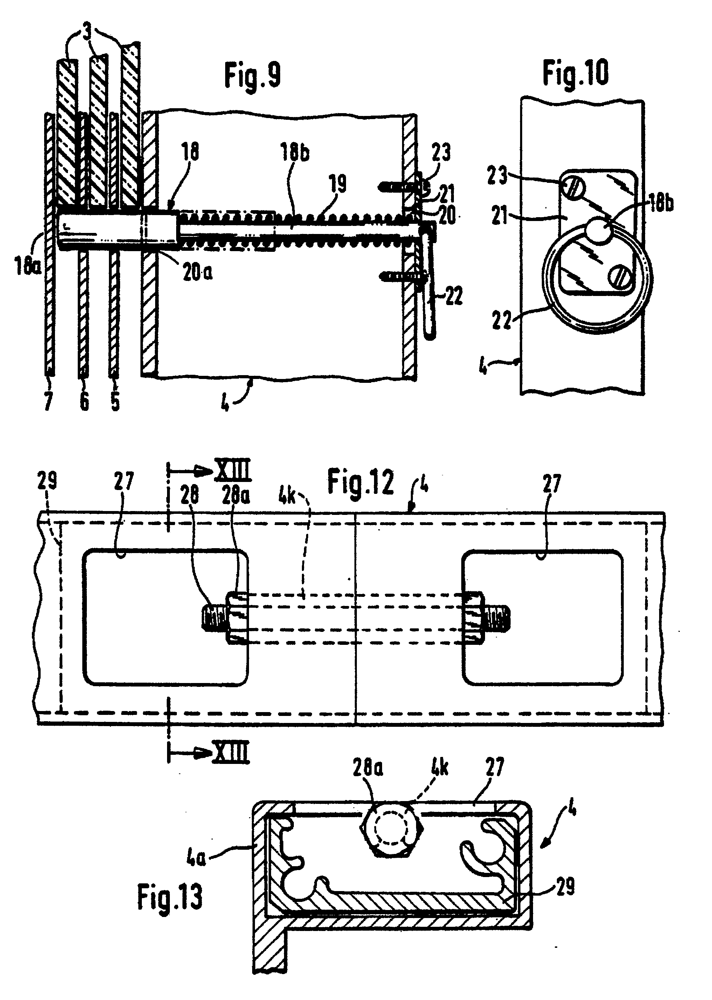

La longueur, l'épaisseur et le nombre de spires du ressort 19 sont choisis telles que lorsqu'on tire au maximum sur l'axe 18 en comprimant le ressort spire contre spire au moyen de l'anneau 22, l'extrémité de la section 18a de grand diamètre de l'axe 18 se trouve juste arrêtée dans le trou 20a proche des rainures comme il est indiqué en traits mixtes sur la figure 9. Il est à noter que la longueur de l'axe 18 est bien entendu adaptée au nombre de rainures.

Comme on peut le voir sur les figures 8 et 9, l'axe 18 est normalement repoussé par le ressort 19 contre l'arceau élémentaire plan supérieur ou externe 7. De ce fait, pour obtenir le blocage, en position basse, de chaque plaque de couverture 3 se trouvant dans la rainure située le plus à l'extérieur, c'est-à-dire comprise entre les deux arceaux élémentaires plans 6 et 7, on perce cette plaque à l'emplacement approprié tel que l'axe 18, repoussé par le ressort 19, puisse passer au travers de celle-ci, ce qui assure le verrouillage de la plaque 3 en position basse et empêche de soulever celle-ci de l'extérieur pour pénétrer dans la structure. Par ailleurs, aussitôt qu'on relève les plaques 3 plus haut que l'endroit où est situé l'axe de blocage 18, on déclenche automatiquement, sans risque d'erreur, une sécurité qui empêche les plaques de couverture 3 relevées de chaque côté de redescendre intempestivement d'elles-mêmes, puisqu'elles viennent obligatoirement et immédiatement reposer sur l'axe 18, comme il est représenté sur la figure 9. Il est à noter que la longueur de l'axe 18 est bien entendu adaptée au nombre de rainures.

La figure 11 représente la façon dont est réalisée l'étanchéité dans la zone de jonction centrale entre les deux éléments mobiles extrêmes 11 c'est-à-dire dans la zone du plan transversal médian P. Cette étanchéité est obtenue au moyen de trois joints creux 24, 25, 26. Ces joints peuvent avoir toute forme appropriée et notamment une forme de "flèche" de section droite triangulaire prolongée par une queue de fixation à lèvres élastiques. Deux joints 24, 25 sont portés par l'arceau droit et ils sont engagés, par leurs queues de fixation, dans les deux rainures interne et externe de l'arceau, c'est-à-dire celle qui est délimitée entre l'arceau élémentaire formant support 4 et l'arceau élémentaire plan interne 5 et celle qui est délimitée entre les deux arceaux élémentaires plans intermédiaire 6 et externe 7. Le troisième joint 26 est porté par l'arceau gauche, en étant engagé dans la rainure médiane délimitée par les arceaux élémentaires plans interne 5 et intermédiaire 6. En position de fermeture, lorsque les deux arceaux mobiles gauche et droit sont voisins l'un de l'autre, le joint d'étanchéité 26 de l'arceau gauche se trouve être engagé et comprimé entre les deux autres joints 24, 25 de l'arceau droit ainsi qu'il est représenté sur la figure 11.

Les figures 12 et 13 illustrent la façon dont peuvent être aboutés plusieurs tronçons de profil destinés à former l'arceau support 4. Cet arceau support 4 présente, sur la face interne des côtés de chacun des deux caissons parallèles 4a, 4b de section droite rectangulaire, une nervure 4k à section droite en forme de C, ouverte vers l'intérieur. Dans deux tronçons de profil devant être aboutés on découpe, dans les grands côtés verticaux des caissons 4a et 4b, des fenêtres 27, de forme rectangulaire, suffisamment grandes pour permettre l'introduction et la manœuvre d'un outil telle qu'une clé. On engage alors longitudinalement, dans les deux portions coaxiales des nervures 4k qui restent présentes dans les zones extrêmes des deux tronçons de profil, une tige filetée en acier inoxydable 28 et on bloque les deux tronçons de profil l'un contre l'autre au moyen de deux écrous 28a qui sont aisément accessibles à travers les fenêtres 27.

Pour renforcer la liaison des deux tronçons de profil aboutés on peut avantageusement loger dans ceux-ci un morceau de profil spécial 29 qui s'étend dans les deux tronçons d'arceau élémentaire 4, de part et d'autre de leur zone de jonction, et qui contribue au renforcement de la liaison.

Bien que l'invention ait été décrite, dans ce qui précède dans le cas d'une application à une structure de couverture téléscopique, il va de soi que les caractéristiques principales de l'invention peuvent être employées dans une structure de couverture à arceaux fixes. Par ailleurs l'invention peut également s'appliquer à la couverture de n'importe quelle zone autre qu'une piscine.

## Revendications

1. Structure de couverture découvrable d'un endroit quelconque, notamment d'une piscine (1), comprenant plusieurs éléments de couverture (9, 10, 11) s'étendant au-dessus de la zone à couvrir, chaque élément de couverture comprenant une paire d'arceaux transversaux (2) entre lesquels s'étendent des plaques de couverture (3) transparentes ou translucides, dont les extrémités longitudinales sont engagées respectivement dans des rainures des deux arceaux d'une même paire de manière à pouvoir coulisser transversalement, caractérisé en ce que chaque arceau (2) d'un élément de couverture (9, 10, 11) présente, dans l'une au moins de ses faces frontales et verticales, au moins trois rainures parallèles et superposées, s'étendant sur toute la longueur de l'arceau et dans lesquelles sont respectivement logées des plaques de couverture (3) en au moins trois morceaux sensiblement de même longueur et en ce que chaque arceau (2) d'un élément de couverture (9, 10, 11) est constitué par la superposition d'un arceau élémentaire inférieur (4), formant support, et d'au moins trois arceaux élémentaires plans (5, 6, 7) pourvus de nervures longitudinales (5a, 5b) formant entretoises, empilés les uns sur les autres au-dessus de l'arceau support inférieur (4) et délimitant entre eux et avec cet arceau support inférieur (4) les rainures de guidage des plaques ce couverture (3).

2. Structure de couverture suivant la revendication 1, caractérisée en ce que l'arceau élémentaire inférieur (4) formant support est constitué de deux caissons parallèles (4a, 4b) de section droite rectangulaire distants l'un de l'autre, dont les grands côtés verticaux sont parallèles et qui sont reliés entre eux, du côté supérieur, par une âme de liaison (4c), cette structure définissant ainsi une rainure (4d), s'ouvrant vers le bas et s'étendant sur toute la longueur de l'arceau élémentaire (4) et l'âme supérieure (4c) qui assure la liaison entre les petits côtés supérieurs (4e, 4f) des deux caisson (4a, 4b) et qui est dans le même plan que ceux-ci présente, sur sa face supérieure, deux nervures longitudinales (4g, 4h) s'étendant tout le long de l'arceau élémentaire formant support (4).

3. Structure de couverture suivant l'une quelconque des revendications 1 et 2, caractérisée en ce que chaque arceau élémentaire plan (5, 6, 7) comprend, sur la partie centrale de sa face inférieure, deux nervures longitudinales inférieures (5a, 5b) formant entretoises et, dans la partie centrale de sa face supérieure, deux autres nervures longitudinales supérieures (5c, 5d) qui font saillie vers le haut, la distance entre les faces internes des deux nervures supérieures (5c, 5d) étant égale à la distance entre les faces externes des deux nervures inférieures (5a, 5b) si bien qu'il est possible de superposer les arceaux élémentaires plans (5, 6, 7) de manière que chaque paire de nervures inférieures (5a, 5b) viennent s'engager étroitement entre les nervures supérieures (5c, 5d) de l'arceau élémentaire disposé juste en-dessous.

4. Structure de couverture suivant l'une quelconque des revendications 1 à 3, du type téléscopique, caractérisée en ce que chaque arceau (2) d'un élément de couverture mobile (10, 11) repose, à ses deux extrémités inférieures, sur un rail de guidage longitudinal (13) qui présente en section droite un profil courbe comportant, dans sa surface supérieure, une gorge (13a) à concavité tournée vers le haut et dans laquelle évoluent des galets (12) solidaires de l'extrémité inférieure des arceaux (2) et, dans sa face externe, une fente longitudinale et horizontale (13b) dans laquelle est engagée l'extrémité inférieure d'un profil recourbé en forme de crochet (14), fixé à l'extrémité inférieure de l'arceau (2).

5. Structure de couverture suivant l'une quelconque des revendications 2 à 4, caractérisée en ce que pour assurer l'étanchéité entre les arceaux (2) venant se placer dans un même plan vertical, lorsque la structure de couverture est déployée, il est prévu des joints d'étanchéité à lèvres ou bavettes (16, 17), identiques mais symétriques par rapport à un plan, qui sont engagés dos à dos dans la rainure

(4d) de l'arceau élémentaire formant support (4) de l'arceau extérieur (2) et qui s'étendent vers l'intérieur de la structure de manière à venir frotter par leurs extrémités sur l'arceau élémentaire plan externe (7) de l'arceau mobile (2) situé à l'intérieur.

6. Structure de couverture suivant l'une quelconque des revendications 2 à 5, caractérisée en ce qu'elle comporte, de chaque côté, un système de blocage en position haute et de verrouillage en position basse de chacune des plaques de couverture (3), lequel comprend un axe (18) repoussé transversalement, par un ressort (19), à travers des trous en regard dont deux (20, 20a), sont percés à travers l'arceau élémentaire formant support (4) et les autres trous sont percés dans les deux arceaux élémentaires plans (5, 6) qui lui sont immédiatement superposés, l'arceau élémentaire plan externe (7) n'étant pas percé, chaque plaque (3) étant percée d'un traversé par l'axe (18) lorsqu'elle se trouve verrouillée en position bassse, les plaques (3) étant empêchées de redescendre d'elles-mêmes, par l'axe (18), dès l'instant où elles se trouvent relevées plus haut que l'endroit où est situé cet axe (18).

7. Structure de couverture suivant la revendication 6, caractérisée en ce que l'axe (18) comporte deux sections de différents diamètres, à savoir une section (18a) de grand diamètre et une tige (18b) de plus petit diamètre prolongeant la précédente vers l'intérieur, sur la tige (18b) de petit diamètre est enfilé le ressort (19), qui prend appui sur l'épaulement de l'axe (18) formé à la jonction entre les deux parties (18a, 18b), la tige (18b) de petit diamètre traverse une plaquette (21) percée d'un petit trou laissant juste passer cette tige (18b) et contre laquelle prend appui le ressort (19), cette plaquette (21) étant fixée sur l'arceau (4) au moyen de vis (23), de manière à obturer le trou (20) de cet arceau, et la partie extrême de la tige (18b) est percée d'un trou dans lequel on engage ensuite un anneau (22) permettant de manœuvrer le système de sécurité en tirant sur l'axe (18), la longueur, l'épaisseur et le nombre de spires du ressort (19) étant choisies telles que, lorsqu'on tire au maximum sur l'axe (18) au moyen de l'anneau (22) jusqu'à compression des spires l'une contre l'autre, l'extrémité de la section (18a) de grand diamétre de l'axe (18) se trouve juste arrêtée dans le trou proche des rainures.

8. Structure de couverture suivant l'une quelconque des revendications 2 à 7, caractérisée en ce qu'elle comprend, dans la zone de jonction centrale entre les deux éléments mobiles extrêmes (11), c'est-à-dire dans la zone du plan transversal médian (P), trois joints d'étanchéité creux (24, 25, 26), deux de ces joints (24, 25) étant portés par l'arceau de l'un des éléments mobiles extrêmes (11) et étant fixés, dans les deux rainures internes et externes de l'arceau, le troisiéme joint (26) étant porté par l'arceau de l'autre élément mobile extrême (11), en étant engagé dans la rainure médiane délimitée par les arceaux élémentaires plan interne (5) et intermédiaire (6) si bien qu'en position de fermeture, lorsque les deux arceaux mobiles sont voisins l'un de l'autre, le joint d'étanchéité (26) de l'un des arceaux se trouve être engagé et comprimé entre les deux autres joints (24, 25) de l'autre arceau.

9. Structure de couverture suivant l'une quelconque des revendications 2 à 8, caractérisée en ce que pour abouter plusieurs tronçons de profil destinés à former l'arceau support (4), cet arceau support (4) présente, sur la face interne des côtés de chacun des deux caissons parallèles (4a, 4b) de section droite rectangulaire, une nervure (4k) à section droite en forme de C, ouverte vers l'intérieur, dans deux tronçons de profil devant être aboutés, on découpe, dans les grands côtés verticaux des caissons (4a, 4b), des fenêtres (27), de forme rectangulaire, suffisamment grandes pour permettre l'introduction et la manœuvre d'un outil tel qu'une clé, on engage alors longitudinalement dans les deux portions coaxiales des nervures (4k) qui restent présentes dans les zones extrêmes des deux tronçons de profil, une tige filetée (28) et on bloque les deux tronçons de profil l'un contre l'autre au moyen de deux écrous (28a) vissés sur la tige filetée (28) et qui sont aisément accessibles à travers les fenêtres (27).

## Patentansprüche

1. Aufdeckbare Überdachungsstruktur für beliebige Örtlichkeiten, insbesondere ein Schwimmbecken (1), mit mehreren sich oberhalb der zu überdachenden Zone erstreckenden Überdachungselemente (9, 10, 11), wobei jedes dieser Überdachungselemente ein Paar Querspriegel (2) umfasst, zwischen welchen sich durchsichtige oder durchscheinende Abdeckplatten (3) erstrecken, deren longitudinale Extremitäten so in jeweiligen Schlitzen der beiden Spriegel eines gleichen Spriegelpaares geführt sind, dass sie in Querrichtung verschoben werden können, dadurch gekennzeichnet, dass jeder Spriegel (2) eines Überdachungselementes (9, 10, 11) in mindestens einer seiner frontalen und vertikalen Fächen mindestens drei parallele, übereinanderliegende Schlitze aufweist, welche sich über die ganze Länge des Spriegels erstrecken und in welchen jeweils Abdeckplatten (3) in mindestens drei Teilen von im wesentlichen gleicher Länge verschieblich gelagert sind und, dass jeder Spriegel (2) eines Überdachungselementes (9, 10, 11) durch die Übereinanderlagerung eines unteren, den Support bildenden Elementarspriegels (4) und mindestens dreier ebener, mit als Stützstege fungierenden Längsleisten (5, 6, 7) versehene Elementarspriegel entsteht, wobei letztere über dem unteren Supportspriegel (4) aufeinander gestapelt sind und unter sich und mit diesem unteren Supportspriegel (4) die Führungsschlitze für die Abdeckplatten (3) bilden.

2. Überdachungsstruktur nach Anspruch 1, dadurch gekennzeichnet, dass der untere, den Support bildende Elementarspriegel (4) aus zwei parallelen, voneinander räumlich getrennten Kastenprofilen (4a, 4b) mit rechteckigem Querschnitt besteht, deren lange vertikale Seiten parallel zueinander und an der Oberseite mittels eines Verbindungsstegs (4c) miteinander verbunden sind, wobei diese Struktur eine sich nach unten öffnende Rille (4d) definiert, welche sich über die ganze Länge des Elementarspriegels (4) erstreckt, und dass der obere Steg (4c), welcher die Verbindung zwischen den beiden oberen, kurzen Seiten (4e, 4f) der beiden Kastenprofile (4a, 4b) herstellt und in der gleichen Ebene wie diese genannten Seiten (4d, 4f) liegt, an seiner Oberseite zwei Längsrippen (4g, 4h) aufweist, welche sich über die gesamte Länge des den Support bildenden Elementarspriegels erstrecken.

3. Überdachungsstruktur nach einem beliebigen der Ansprüche 1 oder 2, dadurch gekennzeichnet, dass jeder ebene Elementarspriegel (5, 6, 7) im zentralen Bereich seiner Unterseite zwei untere, Stützen bildende Längsrippen (5a, 5b) aufweist und im zentralen Bereich seiner Oberseite zwei weitere, obere und nach oben abstehende Längsrippen (5c, 5d), wobei der Abstand zwischen den inneren Seitenflächen der oberen Rippen (5c, 5d) gleich dem Abstand zwischen den äusseren Seitenflächen der unteren Rippen (5a, 5b) ist, so dass die Möglichkeit geschaffen ist, die ebenen Elementarspriegel (5, 6, 7) so aufeinander zu stapeln, dass jedes untere Rippenpaar (5a, 5b) sich genau zwischen den oberen Rippen (5c, 5d) des jeweils darunter befindlichen Spriegels einfügt.

4. Überdachungsstruktur in Teleskopbauart nach einem beliebigen der Ansprüche 1 bis 3, dadurch gekennzeichnet, dass jeder Spriegel (2) eines mobilen Überdachungselementes (10, 11) mit seinen beiden unteren Extremitäten auf einer längsverlaufenden Führungsschiene (13) ruht, welche im Querschnitt ein kurvenförmiges Profil aufweist mit, an seiner Oberseite, einer Laufrille (13a) mit nach oben zeigender Konkavität, in welcher den unteren Extremitäten der Spriegel (2) zugeordnete Laufrollen (12) laufen, und an seiner Aussenseite einer horizontalen Längsnut (13b), in welche die untere Extremität eines hakenförmig gekrümmten Profils (14) hineingreift, welches an der unteren Extremität des Spriegels (2) befestigt ist.

5. Überdachungsstruktur nach einem beliebigen der Ansprüche 1 bis 4, dadurch gekennzeichnet, dass zur Gewährleistung der Dichtheit zwischen den in einer gleichen vertikalen Ebene verlagerten Spriegeln (2), wenn die Überdachungsstruktur geöffnet ist, identische, jedoch bezüglich einer Ebene symmetrische Lippen- oder Schürzendichtungen (16, 17) vorgesehen sind, welche Rücken an Rücken in der Rille (4d) des den Support bildenden Elementarspriegels (4) des äusseren Spriegels (2) sitzen und sich so nach dem Innern der Struktur hin erstrecken, dass sie mit ihren Extremitäten am äusseren ebenen Elementarspriegel (7) des innen befindlichen mobilen Spriegels (2) entlang reiben.

6. Überdachungsstruktur nach einem der beliebigen Ansprüche 2 bis 5, dadurch gekennzeichnet, dass sie in gehobener Stellung ein Blockier- und in gesenkter Stellung ein Verriegelungssystem für jede der Abdeckplatten (3) umfasst, wobei dieses System einen Bolzen (18) aufweist, welcher, unter der Wirkung einer Feder, quer durch miteinander fluchtende Löcher gedrückt wird, wovon zwei (20, 20a) durch den den Support bildenden Elementarspriegel (4) gebohrt sind und die anderen durch die beiden ebenen Elementarspriegel (5, 6), welche unmittelbar auf dem ersten gestapelt sind, der äussere ebene Elementarspriegel (7) nicht durchbohrt ist, jede Platte (3) durch das Hindurchstecken des Bolzens (18) in abgesenkter Stellung verriegelt ist und die Platten (3) durch den Bolzen (18) am ungewollten Herabgleiten gehindert werden, sobald sie sich in einer höheren Stellung befinden, als derjenigen, an welcher dieser Bolzen (18) angeordnet ist.

7. Überdachungsstruktur nach Anspruch 6, dadurch gekennzeichnet, dass der Bolzen (18) zwei Querschnitte mit unterschiedlichen Durchmessern aufweist, und zwar einen Querschnitt (18a) mit einem grossen Durchmesser und einen Stift (18b), welcher letzteren nach innen verlängert, mit einem kleineren Durchmesser, wobei auf dem Stift (18b) mit dem kleineren Durchmesser die Feder (19) aufgesteckt ist, welche sich an der den Übergang zwischen den beiden Teilen (18a, 18b) gebildeten Schulter abstützt, der Stift (18b) mit dem kleinen Durchmesser eine Platte (21) durchquert mit einer kleinen Öffnung, die für das Durchlassen dieses Stiftes (18b) gerade ausreichend ist und an welcher Platte (21) die Feder (19) sich abstützt, diese Platte (21) so mittels Schrauben (23) am Spriegel (4) befestigt ist, dass sie die Öffnung (20) dieses Spriegels abschliesst, die Extremität des Stiftes (18b) eine Querbohrung aufweist, durch welche ein Ring (22) hindurch geführt ist zum Betätigen des Sicherheitssystems mittels Zugausübung am Bolzen (18) und die Länge, der Durchmesser und die Anzahl Windungen der Feder (19) so gewählt sind, dass, wenn mit voller Kraft mittels des Ringes (22) bis zum gegenseitigen Anliegen der Federwindungen aneinander am Bolzen (18) gezogen wird, die Extremität des Querschnitts (18a) mit grossem Durchmesser des Bolzens (18) gerade noch in dem an den Rillen anliegenden Loch (20a) gehalten ist.

8. Überdachungsstruktur nach einem beliebigen der Ansprüche 2 bis 7, dadurch gekennzeichnet, dass sie in der zentralen Verbindungszone zwischen den beiden äussersten mobilen Elementen (11), d.h. in der Zone der transversalen Mittelebene (P), drei hohle Dichtungen (24, 25, 26) aufweist, wobei zwei davon (24, 25) vom Spriegel eines der äussersten Elemente (11) getragen werden und in den beiden inneren und äusseren Rillen des Spriegels befestigt sind, und die dritte Dichtung (26) vom Spriegel des anderen äussersten mobilen Elementes (11) getragen wird, indem sie in der von dem inneren (5) und dem mittleren (6) Elementarspriegel gebildeten Rille gefasst ist, so dass in Schliessstellung, wenn die beiden mobilen Spriegel benachbart sind, die Dichtung (26) des einen Spriegels komprimiert zwischen und mit den beiden anderen Dichtungen (24, 25) des anderen Spriegels im Eingriff ist.

9. Überdachungsstruktur nach einem beliebigen der Ansprüche 2 bis 8, dadurch gekennzeichnet, dass zum Aneinandersetzen mehrerer Profilabschnitte zwecks Bildung des Supportspriegels (4) dieser letztere an der Innenfläche der Seite eines jeden der beiden parallelen Kastenprofile (4a, 4b) mit Rechteckquerschnitt einen C-förmigen, nach innen offenen Ansatz (4k) aufweist, dass man bei zwei stossend aneinanderzufügenden Profilabschnitten in den langen vertikalen Seiten der Kastenprofile (4a, 4b) rechteckige Fenster (27) ausschneidet, um das Einführen und die Handhabung eines Werkzeugs, wie etwa eines Schlüssels, zu ermöglichen, dass man sodann in den beiden koaxialen Abschnitten der in den extremen Zonen der beiden Profilabschnitte vorhanden bleibenden Ansätze (4k) einen Gewindestift (28) einführt und die beiden Profilabschnitte durch Verschrauben mittels zweier auf den Gewindestift (28) aufgeschraubter Muttern (28a), welche durch die Fenster (27) leicht zugänglich bleiben, fest miteinander verbindet.

## Claims

1. Openable covering structure for any location, in particular a swimming pool (1), comprising several covering elements (9, 10, 11) extending above the zone to be covered, each covering element comprising a pair of transverse arches (2) between which extend transparent or translucid covering plates (3), the longitudinal ends of which are engaged respectively in grooves in the two arches of one and the same pair, so as to be capable of sliding transversely, characterized in that each arch (2) of a covering element (9, 10, 11) has, in at least one of its front vertical faces, at least three parallel and superposed grooves which extend over the entire length of the arch and in which are fitted respectively covering plates (3) consisting of at least three pieces substantially of the same length, and in that each arch (2) of a covering element (9, 10, 11) is formed as a result of the superposition of a lower elementary arch (4) forming a support and of at least three plane elementary arches (5, 6, 7) which are equipped with longitudinal ribs (5a, 5b) forming spacers and which are stacked on top of one another above the lower supporting arch (4) and which delimit between them and relative to the lower supporting arch (4) the guide grooves for the covering plates (3).

2. Covering structure according to Claim 1, characterized in that the lower elementary arch (4) forming a support consists of two parallel boxes (4a, 4b) of rectangular cross-section, which are arranged at a distance from one another and the vertical long sides of which are parallel and which are connected to one another, on the topside, by means of a connecting web (4c), this structure thus defining a groove (4d) opening downwards and extending over the entire length of the elementary arch (4), and the upper web (4c) which makes the connection between the upper short sides (4e, 4f) of the two boxes (4a, 4b) and which is in the same plane as these has, on its upper face, two longitudinal ribs (4g, 4h) extending over the entire length of the elementary arch forming a support (4).

3. Covering structure according to either one of Claims 1 and 2, characterized in that each plane elementary arch (5, 6, 7) possesses on the central part of its lower face, two lower longitudinal ribs (5a, 5b) forming spacers and, in the central part of its upper face, two other upper longitudinal ribs (5c, 5d) which project upwards, the distance between the inner faces of the two upper ribs (5c, 5d) being equal to the distance between the outer faces of the two lower ribs (5a, 5b), with the result that it is possible to superpose the plane elementary arches (5, 6, 7) in such a way that each pair of lower ribs (5a, 5b) engages firmly between the upper ribs (5c, 5d) of the elementary arch located immediately below it.

4. Covering structure according to any one of Claims 1 to 3 of the telescopic type, characterized in that each arch (2) of a movable covering element (10, 11) rests, at its two lower ends, on a longitudinal guide rail (13) which, in cross-section, has a curved profile possessing, in its upper surface, a recess (13a) which is upwardly concave and in which move rollers (12) fixed to the lower end of the arches (2) and, in its outer face, a longitudinal and a horizontal slot (13b), in which is fitted the lower end of a curved section in the form of a hook (14) fastened to the lower end of the arch (2).

5. Covering structure according to any one of Claims 2 to 4, characterized in that, to ensure sealing between the arches (2) taking up position in one and the same vertical plane when the covering structure is extended, there are gaskets with lips or flaps (16, 17) which are identical but symmetrical relative to a plane and which are fitted back to back in the groove (4d) of the elementary arch forming a support (4) of the outer arch (2) and which extend towards the interior of the structure, so that their ends rub against the outer plane elementary arch (7) of the movable arch (2) located on the inside.

6. Covering structure according to any one of Claims 2 to 5, characterized in that it possesses, on each side, a system for locking each of the covering plated (3) in the high position and in the low position, the said locking system comprising a pin (18) pushed transversely by a spring (19) through holes facing one another, of which two (20, 20a) are made through the elementary arch forming a support (4) and the other holes are made in the two plane elementary arches (5, 6) located immediately above it, the outer plane elementary arch (7) not being perforated, and each plate (3) is perforated with a hole through which the pin (18) passes when it is locked in the low position, the plates (3) being prevented from dropping again by themselves by the pin (18) from the moment when they are raised higher than the location of this pin (18).

7. Covering structure according to Claim 6, characterized in that the pin (18) comprises two sections of different diameters, namely a section (18a) of large diameter and a stem (18b) of smaller diameter which extends the preceding section towards the inside, the spring (19) being slipped over the stem (18b) of small diameter and bearing on the shoulder of the pin (18) formed at the junction between the two parts (18a, 18b), the stem (18b) of small diameter passing through a small plate (21) which is perforated with a small hole just allowing this stem (18b) to pass through and against which the spring (19) bears, this small plate (21) being fastened to the arch (4) by means of screws (23), so as to close off the hole (20) in this arch, the end part of the stem (18b) being perforated with a hole, in which is subsequently fitted a ring (22) which makes it possible to operate the safety system by pulling on the pin (18), and the length, thickness and number of turns of the spring (19) being selected so that when the pin (18) is pulled as far as possible by means of the ring (22) until the turns are compressed against one another, the end of the section (18a) of large diameter of the pin (18) is stopped flush in the hole near the grooves.

8. Covering structure according to any one of Claims 2 to 7, characterized in that it possesses, in the central junction zone between the two movable end elements (11), that is to say in the zone of the transverse mid-plane (p), three hollow gaskets (24, 25, 26), two of these gaskets (24, 25) being carried by the arch of one of the movable end elements (11) and being engaged in the two inner and outer grooves of the arch, the third gasket (26) being carried by the arch of the other movable end element (11) and being engaged in the middle groove delimited by the inner plane elementary arch (5) and the intermediate plane elementary arch (6), with the result that, in the closing position, when the two movable arches are adjacent to one another, the gasket (26) of one of the arches in engaged and compressed between the other two gaskets (24, 25) of the other arch.

9. Covering structure according to any one of Claims 2 to 8, characterized in that, in order to join end to end several profile portions intended for forming the supporting arch (4), this supporting arch (4) has, on the inner face of the sides of each of the two parallel boxes (4a, 4b) of rectangular cross-section, a rib (4k) of C-shaped cross-section open towards the inside, rectangular apertures (27) sufficiently large to allow a tool, such as a spanner, to be inserted and manipulated are cut out from the vertical long sides of the boxes (4a, 4b) of two profile portions to be joined end to end, a threaded rod (28) is then engaged longitudinally into the two coaxial portions of the ribs (4k) which are still present in the end zones of the two profile portions, and the two profile portions are retained against one another by means of two nuts (28a) which are screwed on the threaded rod (28) and which are readily accessible through the apertures (27).

Fig.1

Fig.2

Fig.3

Fig.4

Fig.5

EP 0 224 290 B1

**Fig. 6**

**Fig. 7**

EP 0 224 290 B1

**Fig.8**

**Fig.11**

Fig.9

Fig.10

Fig.12

Fig.13